# EUROPEAN PATENT APPLICATION

(11) **EP 4 597 739 A1**
(43) Date of publication of application: **06.08.2025**
(21) Application number: 23872722.6
(22) Date of filing: 30.06.2023
(51) Int. Cl.: H01M 50/59, H01M 50/588, H01M 50/503, H01M 50/507, H01M 50/519, H01M 50/569, H01M 50/543

(54) **BATTERY MODULE AND BATTERY PACK**

(30) Priority: 29.09.2022 KR 20220124728
(71) Applicant: LG Energy Solution, Ltd., Seoul 07335 (KR)
(72) Inventor: KIM, Sung Gyu, Daejeon 34122 (KR)
(74) Representative: Plasseraud IP
(86) International application number: PCT/KR2023/009260
(87) International publication number: WO 2024/071596

(57) **Abstract**

The present invention relates to a battery module, in which a busbar assembly is simplified in shape and reduced in volume to improve space utilization of a battery pack and efficiency of a manufacturing process, and a battery pack.

A battery pack according to the present invention includes a plurality of cell groups comprising one or more cells and a terminal, and a busbar assembly disposed on one end of a top surface of each of the cell groups, wherein the busbar assembly includes a busbar disposed at a position corresponding to a position of the terminal to electrically connect the cell groups to each other, a circuit board electrically connected to the busbar to sense the cell groups, and a film laminated on the busbar and the circuit board to prevent the busbar and the circuit board from moving.

## Description

### TECHNICAL FIELD

### CROSS-REFERENCE TO RELATED APPLICATION

The present application claims the benefit of the priority of Korean Patent Application No. 10-2022-0124728, filed on September 29, 2022, which is hereby incorporated by reference in its entirety.

### TECHNICALFIELD

The present invention relates to a battery module and a battery pack, and more particularly, to a battery module of a secondary battery, which includes a plurality of cells, and a battery pack.

### BACKGROUND ART

In recent years, the price of energy sources increases due to the depletion of fossil fuels, the interest in environmental pollution is amplified, and the demand for ecofriendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Recently, as the need for large-capacity structures in addition to the use as an energy storage source are increasing, demands for battery packs in which a plurality of secondary batteries or battery modules are aggregated is increasing, and thus, demands for battery modules are also increasing.

Generally, the battery module may include a plurality of secondary batteries, and the battery pack may be configured to include a plurality of battery modules. However, recently, it is also possible to constitute a battery pack in which units including a plurality of secondary batteries are gathered together.

The battery module or the battery pack may include a busbar frame on which a busbar, a circuit board, etc. required for electrical connection are disposed.

The busbar frame according to the related art is manufactured using an injection-molded product and thus has a problem of insufficient space utilization.

Thus, there is a need for a battery module or battery pack that includes a configuration that is capable of improving efficiency of an assembly process and improve the space utilization.

### DISCLOSURE OF THE INVENTION

### TECHNICAL PROBLEM

The present invention has been invented to solve the above problem, and an object of the present invention is to provide a battery module including a busbar assembly having a shape capable of improving space utilization by simplifying the shape and reducing a volume and a battery pack.

### TECHNICAL SOLUTION

A battery pack according to the present invention includes a plurality of cell groups comprising one or more cells and a terminal, and a busbar assembly disposed on one end of a top surface of each of the cell groups, wherein the busbar assembly includes a busbar disposed at a position corresponding to a position of the terminal to electrically connect the cell groups to each other, a circuit board electrically connected to the busbar to sense the cell groups, and a film laminated on the busbar and the circuit board to prevent the busbar and the circuit board from moving.

The circuit board may include a body part having a thin plate shape extending in a stacking direction of the cell groups, and a connection part having one end connected to the body part and the other end electrically connected to the busbar, wherein one surface of the connection part, which faces the busbar, may be opened so that a conductive portion therein is exposed.

The busbar assembly may further include a conductive adhesive attached to one surface of the connection part to electrically connect the connection part to the busbar.

The circuit board may further include a connector connected to the body part so as to be electrically connected to the outside.

The connection part may have a bent shape so that one end and the other of the connection part in a thickness direction are disposed at positions spaced apart from each other.

The busbar assembly may further include a support part disposed below the body part to support the body part and laminated into the film together with the busbar and the circuit board.

The support part may include acrylic.

The busbar assembly may further include a terminal having one end connected to the circuit board and the other end connected to the busbar, wherein the terminal may include copper (Cu) or Nickel (Ni).

The terminal may be connected to the circuit board through soldering and be connected to the busbar through laser welding.

The busbar assembly may further include a fixing part disposed on each of both ends of the film to fix the film to the cell groups.

The fixing part may include a horizontal portion surrounded by the film so as to be fixed to the film, and a vertical portion connected to the horizontal portion in a bent shape and disposed to be in contact with the cell groups.

The film may include an upper film disposed above the busbar and the circuit board, and a lower film disposed below the busbar and the circuit board, wherein the horizontal portion may be disposed between the upper film and the lower film.

The lower film may be opened at a position corresponding to a position of the terminal so that the busbar and the terminal are in contact with each other.

A distance between the vertical portions disposed on both ends of the films may correspond to the sum of widths of the cell groups.

The vertical portion may have a coupling hole with a shape that passes from one surface facing the cell group to the other, and the fixing part may further include a coupling member coupled to the coupling hole so that the vertical portion is fixed to the cell groups.

The busbar assembly may have a thin plate shape.

The film may include an insulating film.

The film may be opened at a position corresponding to a position of the terminal so that the busbar and the terminal are in contact with each other.

The circuit board may include an antenna having a shape printed with a pattern, and data on cell groups may be wirelessly transmitted to the outside through the antenna.

The circuit board may include a flexible circuit board of which a shape is deformed when force is applied.

The cell group may further include a terminal support part disposed to surround the terminal so as to support the terminal.

A battery module may include a plurality of cell comprising a terminal protruding from one end thereof, and a busbar assembly disposed on one end of a top surface of each of the cells, wherein the busbar assembly may include a busbar disposed at a position corresponding to a position of the terminal to electrically connect the cells to each other, a circuit board electrically connected to the busbar to sense the cells, and a film configured to laminate the busbar and the circuit board to prevent the busbar and the circuit board from moving.

### ADVANTAGEOUS EFFECTS

The battery pack according to the present invention may include the plurality of cell groups including one or more cells and a terminal and disposed on the one end of the top surface of each of the cell groups, and the busbar assembly may include the busbar disposed at the position corresponding to the position of the terminal to electrically connect the cell groups to each other, the circuit board electrically connected to the busbar to sense the cell groups, and the film laminated on the busbar and the circuit board to prevent the busbar and the circuit board from moving.

Thus, the shape of the busbar assembly may be simplified to reduce the volume, thereby improving the space utilization of the battery pack.

In addition, the process of manufacturing the busbar assembly may be simplified to improve the efficiency of the battery pack manufacturing process.

In addition, the process of assembling the busbar assembly may be simplified to improve the efficiency of the battery pack manufacturing process.

In addition, the efficiency of the battery pack manufacturing process may be improved by efficiently connecting the busbar to the circuit board.

The effects of the prevent invention are not limited by the aforementioned description, and thus, more varied effects are involved in this specification.

### BRIEF DESCRIPTION OF THE DRAWINGS

FIG. 1 is a schematic perspective view illustrating a battery pack according to Embodiment 1 of the present invention.
FIG. 2 is a schematic enlarged perspective view of a portion A of FIG. 1.
FIG. 3 is a schematic plan view illustrating a state when the battery pack is viewed from the top according to Embodiment 1 of the present invention.
FIG. 4 is a schematic cross-sectional view illustrating a state when a cross-section taken along line B-B' of FIG. 2 is viewed from the side.
FIG. 5 is a schematic perspective view illustrating a fixing part of a busbar assembly according to Embodiment 1 of the present invention.
FIG. 6 is a schematic perspective view illustrating a battery pack according to Embodiment 2 of the present invention.
FIG. 7 is a schematic plan view illustrating a state when the battery pack is viewed from the top according to Embodiment 2 of the present invention.
FIG. 8 is a schematic perspective view illustrating a state when a cross-section taken along line C-C' of FIG. 6 is viewed from the side.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

The present invention provides a battery pack 10 as Embodiment 1.

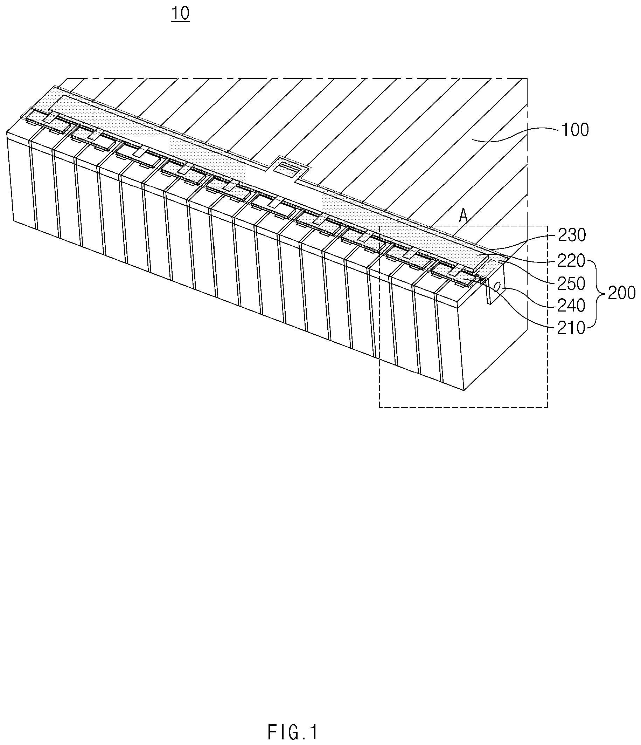

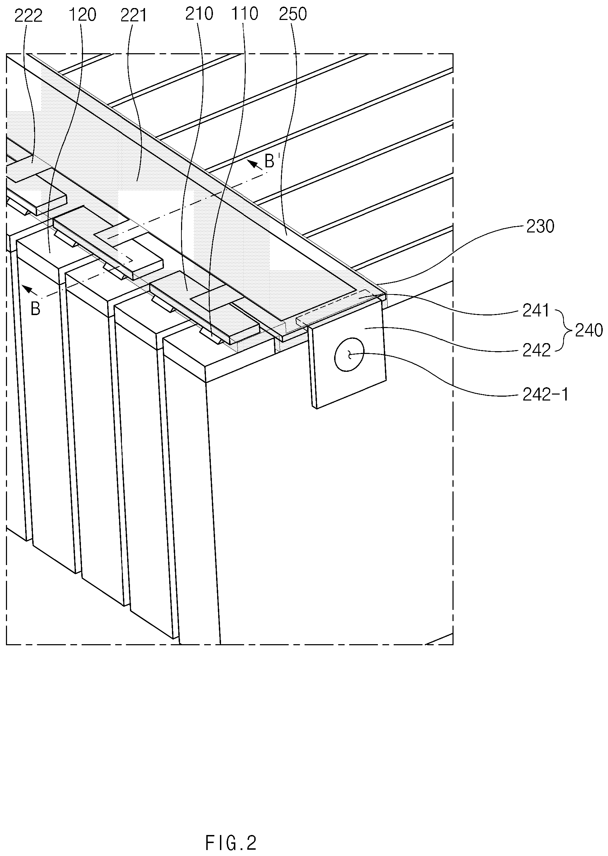

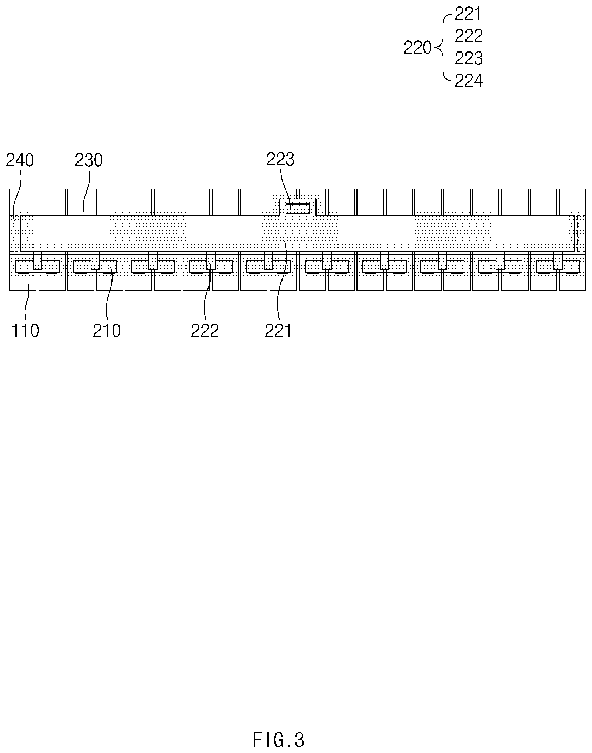

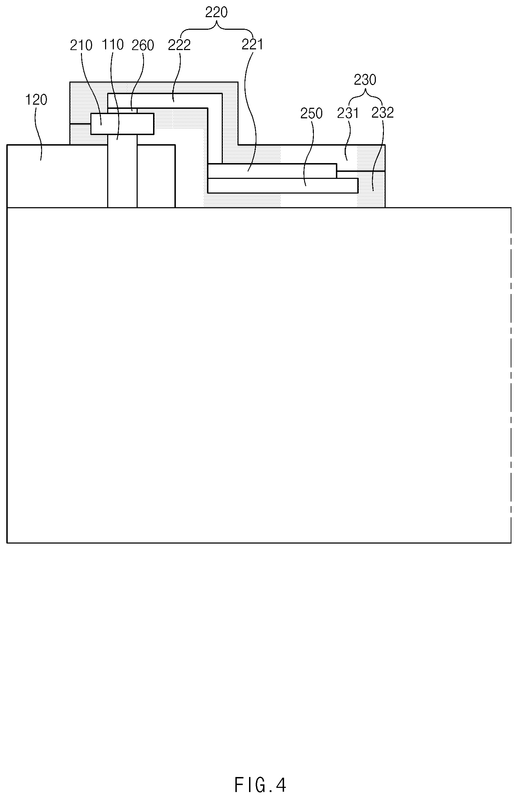

FIG. 1 is a schematic perspective view illustrating a battery pack according to Embodiment 1 of the present invention, and FIG. 2 is a schematic enlarged perspective view of a portion A of FIG. 1. In addition, FIG. 3 is a schematic plan view illustrating a state when the battery pack is viewed from the top according to Embodiment 1 of the present invention, and FIG. 4 is a schematic cross-sectional view illustrating a state when a cross-section taken along line B-B' of FIG. 2 is viewed from the side.

Referring to FIG. 1, a battery pack 10 according to Embodiment 1 of the present invention may include a cell group 100 and a busbar assembly 200.

The cell group 100 according to Embodiment 1 of the present invention may include one or more cells therein. Here, each of the cells may refer to a pouch cell that produces electricity through repeated charging and discharging, and one or more cells may be accommodated inside an exterior having a substantially rectangular parallelepiped shape. In addition, a plurality of exteriors accommodating the cells therein may be stacked side by side to provide the battery pack 10 having a substantially rectangular parallelepiped shape. Here, the cell group 100 may be a battery module including the plurality of cells.

Although not shown in Embodiment 1 of the present invention, features of the present invention may be applied even to a battery module of the same type as the battery pack 10. Here, the cell group 100 may be one square cell. In addition, the square cells may be gathered together to provide a battery module similar to the battery pack 10 according to Embodiment 1 of the present invention. Thus, the features according to Embodiment 1 of the present invention may not be limited to the battery packs and may be equally applied to the battery module.

The cell group 100 may include a terminal 110 protruding from one end. Specifically, the terminal 110 may be provided to protrude from one end of the cell group 100 toward a top surface thereof. The terminal 110 may serve to electrically connect the cell group 100 to other components. There are no restriction on the shape of the terminal 110, but the terminal 110 may have a substantially rectangular parallelepiped shape with a flat top for efficient connection with the busbar 210, which will be described later.

The cell group 100 of the battery pack 10 according to Embodiment 1 of the present invention may further include a terminal support part 120.

The terminal support part 120 may be disposed to surround the terminal 110 so as to support the terminal 110. Thus, the terminal 110 may be provided to protrude upward from the inside of the cell group 100 and may be surrounded by the terminal support part 120 except for a portion for connection to the busbar 210. Here, the terminal support part 120 may have a substantially rectangular parallelepiped shape.

The terminal support part 120 of the cell group 100 may be made of an insulating material to serve to insulate the terminal 110 from the outside.

Referring to FIGS. 2 and 3, the busbar assembly 200 of the battery pack 10 according to Embodiment 1 of the present invention may be disposed at one end of the top surface of the cell group 100 and then be electrically connected to the cell group 100. The busbar assembly 200 may be provided to have a thin thickness and small volume, and thus, even though the busbar assembly 200 is disposed at an end of an upper portion of the cell group 100, the busbar assembly may occupy a significantly less space than the busbar frame according to the related art.

The busbar assembly 200 of the battery pack 10 may include a busbar 210, a circuit board 220, and a film 230.

The busbar 210 of the busbar assembly 200 may be disposed at a position corresponding to the position of the terminal 110. Specifically, the busbar 210 may be disposed to be in contact with the terminal 110 so as to electrically connect the plurality of cell groups 100 to each other.

The busbar 210 may have a substantially rectangular plate shape extending along the stacking direction of the cell groups 100.

The circuit board 220 of the busbar assembly 200 may be electrically connected to the busbar 210 to sense various states of each of the cell groups 100. Since the busbar 210 is electrically connected to the cell group 100, the circuit board 220 may be electrically connected to the cell group 100. Here, the circuit board 220 may be a flexible printed circuit board (FPCB) of which a shape is deformed when force is applied.

The film 230 of the busbar assembly 200 may be disposed above and below the busbar 210 to laminate the busbar 210 and the circuit board 220 so as to be prevented from moving. Here, the film 230 may be an insulating film to ensure insulating properties of the laminated components. Here, the lamination may refer to a technology that protects a surface and increases in strength and stability by covering a target object with one or more thin layers.

The film 230 may include an upper film 231 and a lower film 232. The upper film 231 may be disposed above the busbar 210 and the circuit board 220, and the lower film 232 may be disposed below the busbar 210 and the circuit board 220.

The lamination process using the film 230 is briefly described as follows.

Objects to be laminated may be disposed between an upper jig and a lower jig. Here, a space in which the object is disposed may be defined between the upper jig and the lower jig. The busbar 210 and the circuit board 220 connected to each other may be disposed between the upper jig and the lower jig, and the upper film 231 and the lower film 232 may be disposed above and below the busbar 210 and the circuit board 220, respectively. The upper jig and the lower jig, on which the objects to be laminated are disposed, may laminate the objects disposed inside while being pressed in a direction moving closer to each other.

After the lamination process, the upper film 231 and the lower film 232 may be in contact with each other on an outer surface, and the busbar 210 and the circuit board 220 may be disposed between the upper film 231 and the lower film 232.

Since the busbar assembly 200 according to Embodiment 1 of the present invention, which is formed through the lamination, is provided to be thinner and occupy a volume less than the busbar frame according to the related art, the cell groups 100 may be easily disposed, and the space utilization may be improved.

The lower film 232 may be disposed on a bottom surface of the busbar 210 laminated with the film 230. Here, the busbar 210 needs to be in contact with the terminal 110 of the cell group 100 for electrical connection. As an example of a configuration for contact with the terminal 110, a portion of the lower film 232 according to Embodiment 1 of the present invention may be opened. Specifically, the lower film 232 may be provided in an opened form at a position corresponding to the position of the terminal 110 so that the busbar 210 and the terminal 110 are in contact with each other. Thus, the terminal 110 may be disposed in the opened portion of the lower film 232 and be in contact with the busbar 210.

As an example of a configuration for efficient connection to the busbar 210, the circuit board 220 according to Embodiment 1 of the present invention may include a body part 221 and a connection part 222.

Referring to FIGS. 2 to 4, the body part 221 may have a thin plate shape extending in the stacking direction of the cell group 100. Specifically, the body part 221 may be disposed to be spaced apart from the terminal support part 120.

The connection part 222 may have a shape of which one end is connected to the body part 221 and extends toward the busbar 210. Here, the other end of the connection part 222 may be electrically connected to the busbar 210. The connection part 222 may have a thin plate shape, may be provided in plurality, and may be electrically connected to each of the plurality of busbars 210.

As an example of a configuration for efficient arrangement with other components, the connection part 222 according to Embodiment 1 of the present invention may have a bent shape.

The connection part 222 of the circuit board 220 may have a bent shape so that one end is disposed at a position spaced apart from the other end based on a thickness direction. Referring to FIG. 4, one end of the connection part 222 may be disposed on an upper portion of the busbar 210 disposed at a position higher than the terminal support part 120, and the other end of the connection part 222 may be connected to the body part 221 disposed at a position lower than the busbar 210. Thus, a height difference may occur between one end and the other end of the connection part 222. That is, in order that one end and the other end are disposed to have the height difference therebetween, the connection part 222 may have a partially bent shape. More specifically, the connection part 222 may be bent so as not to collide with the terminal support part 120.

As an example of a configuration for electrical connection to the busbar 210, one surface of the connection part 222 according to Embodiment 1 of the present invention may be opened. Specifically, the connection part 222 of the circuit board 220 may have the opened one surface and thus be exposed to the outside so that a conductive portion provided therein is electrically connected to the busbar 210.

As an example of a configuration for efficient electrical connection between the busbar 210 and the connection part 222, the busbar assembly 200 according to Embodiment 1 of the present invention may further include a conductive adhesive 260.

Referring to FIG. 4, the conductive adhesive 260 may be attached to a bottom surface of the connection part 222 so that one surface of the conductive adhesive 260 is in contact with the bottom surface of the connection part 222, and the other surface is in contact with the top surface of the busbar 210. The conductive adhesive 260 may be a conductor through which current flows and may have adhesive properties to adhere to the connection part 222 and the busbar 210.

If the busbar assembly 200 includes the conductive adhesive 260, the connection part 222 and the busbar 210 may be electrically connected relatively easily without an additional process such as welding to improve efficiency in the process of manufacturing the battery pack 10.

As an example of a configuration for electrical connection to the outside, the circuit board 220 according to Embodiment 1 of the present invention may further include a connector 223.

The connector 223 may be disposed to be connected to the body part 221 and may have various shapes as long as the connector is electrically connected to the outside.

The connector 223 may serve as a medium for electrically connecting the circuit board 220 to the outside. Thus, data about the cell group 100 sensed by the circuit board 220 may be transmitted to the outside through the connector 223.

If the circuit board 220 is the flexible printed circuit board (FPCB), rigidity may be relatively weak enough to be deformed when force is applied, and thus, additional components for supplementing the rigidity may be necessary to support the circuit board 220. As an example of a configuration for supporting the circuit board 220, the busbar assembly 200 according to Embodiment 1 of the present invention may further include a support part 250.

The support part 250 may be disposed below the circuit board 220 to support the circuit board 220 so that the circuit board 220 is fixed. Specifically, the support part 250 may be disposed below the body part 221 of the circuit board 220 to support the body part 221 so that the body part 221 is fixed.

The support part 250 may be made of a material with relatively higher rigidity than the circuit board 220 so as to support the circuit board 220. For example, the support part 250 may be made of plastic and preferably may be an acrylic plate made of acrylic.

To prevent the shape of the circuit board 220 from being deformed by being disposed below the circuit board 220, the support part 250 may have a substantially rectangular plate shape. Here, since the support part 250 according to Embodiment 1 of the present invention is disposed below the body part 221 of the circuit board 220, the support part 250 may have a plate shape with an area greater than or equal to that of the body part 221 that is in contact with the support part 250.

The support part 250 may be laminated with the film 230 together with the busbar 210 and the circuit board 220 so as to be integrated with the busbar 210 and the circuit board 220.

Although not shown in Embodiment 1 of the present invention, the support part 250 may be disposed below the connection part 222 to support the connection part 222.

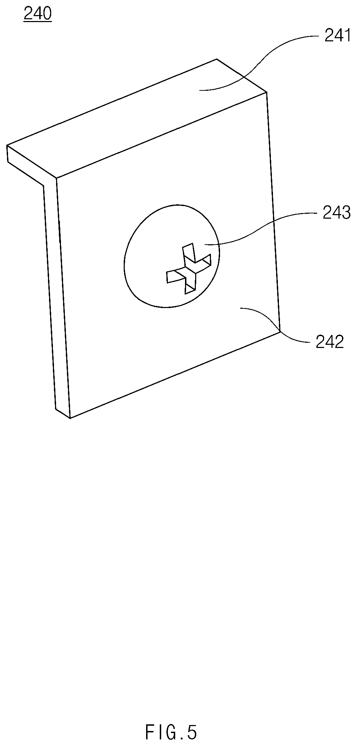

FIG. 5 is a schematic perspective view illustrating a fixing part 240 of the busbar assembly 200 according to Embodiment 1 of the present invention.

As an example of a configuration for fixing the busbar assembly 200 to the cell group 100, the busbar assembly 200 according to Embodiment 1 of the present invention may further include the fixing part 240.

The fixing parts 240 may be disposed at each of both ends of the film 230 to fix the film 230 to the cell group 100. Since the film 230 is fixed to the cell group 100 by the fixing part 240, the busbar 210, the circuit board 220, and the support part 250, which are laminated by the film 230, may also be fixed to the cell group 100. Thus, the busbar assembly 200 may be fixed to the cell group 100 by the fixing part 240.

Since the fixing part 240 is configured to fix the cell group 100, the fixing part 240 may include a material with higher rigidity than the film 230 so as to be maintained in its shape. For example, the fixing part 240 may include stainless steel. Specifically, the fixing part 240 may be made of stainless steel.

As an example of a configuration for efficient fixation, the fixing part 240 of the busbar assembly 200 according to Embodiment 1 of the present invention may include a horizontal portion 241 and a vertical portion 242.

Referring to FIG. 5, the horizontal portion 241 of the fixing part 240 may have a substantially thin plate shape. The horizontal portion 241 may be disposed on a top surface of the support part 250 and wrapped with the film 230 to be fixed to the film 230. Specifically, the horizontal portion 241 may be interposed between the upper film 231 and the lower film 232.

The vertical portion 242 of the fixing part 240 may be connected to the horizontal portion 241 in a bent shape. Specifically, the horizontal portion 241 and the vertical portion 242 may be connected to each other in a shape bent at approximately 90 degrees so that the horizontal portion 241 and the vertical portion 242 are disposed approximately perpendicular to each other.

The vertical portion 242 may be disposed so that one surface thereof is in contact with a side surface of the cell group 100. That is, the vertical portion 242 disposed at each of both ends of the film 230 may be disposed at each of both ends of the plurality of cell groups 100.

In order for the film 230 to be fixed to the cell group 100 by the vertical portion 242 of the fixing part 240, the vertical portion 242 may be disposed so that a distance between the pair of vertical portions 242 disposed at both the ends of the film 230 corresponds to the sum of widths of the plurality of cell groups 100. Thus, the fixing part 240 disposed at each of both the ends of the film 230 may be inserted into the cell group while the vertical portion 242 is in contact with the side surface of the cell group 100, and thus, the film 230 may be fixed to the cell group 100.

As an example of a configuration for improving the fixing force, the fixing part 240 according to Embodiment 1 of the present invention may further include a coupling member 243.

In order to couple the coupling member 243, a coupling hole 242-1 may be defined in the vertical portion 242 of the fixing part 240. The coupling hole 242-1 may be provided in a shape that passes from one side of the vertical portion 242 facing the cell group 100 to the other side.

Since any shape that allows the coupling of the coupling member 243 is sufficient, the shape of the coupling hole 242-1 may vary. However, the coupling member 243 according to Embodiment 1 of the present invention may be a bolt, and the coupling hole 242-1 may have a penetrated shape with a substantially circular cross-section.

Referring to FIG. 5, the coupling member 243 of the fixing part 240 may be coupled to the coupling hole 242-1 so that the vertical portion 242 is fixed to the cell group 100. Specifically, the coupling member 243 may be coupled in a direction from the other surface to one surface of the vertical portion 242.

When the coupling member 243 is coupled to the vertical portion 242, fixing force may be improved when compared to a case in which the vertical portion 242 is inserted into the cell group 100 so as to be fixed, and thus, the busbar assembly 200 may be more stably fixed to the cell group 100.

The busbar assembly 200 of the battery pack 10 according to Embodiment 1 of the present invention may have a simplified shape and reduced volume to improve the space utilization of the battery pack 10. In addition, since the busbar assembly 200 is manufactured through the lamination process, the process of manufacturing the busbar assembly 200 may be simplified, and efficiency of the process of manufacturing the battery pack 10 may be improved. In addition, the busbar assembly 200 of the battery pack 10 may include the support part 250 to improve the stability and may include the fixing part 240 to simplify the assembly process with the cell group 100, thereby improving the efficiency of the process of assembling the battery pack 10.

### Embodiment 2

The present invention provides a battery pack 10' including a different type of cell group 100' and a busbar assembly 200' as Embodiment 2.

The battery pack 10' according to Embodiment 2 of the present invention may be different from the battery pack 10 according to Embodiment 1 in a shape of a circuit board 220', a shape of a film 230', presence or absence of a terminal 270, and presence or absence of an antenna.

Hereinafter, detailed descriptions of the same configuration as that of the battery pack 10 according to Embodiment 1 of the present invention will be omitted.

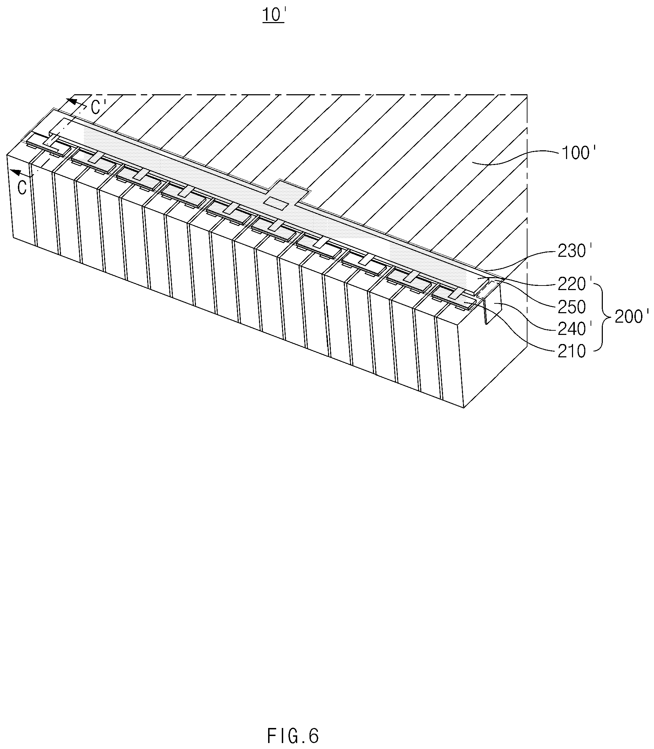

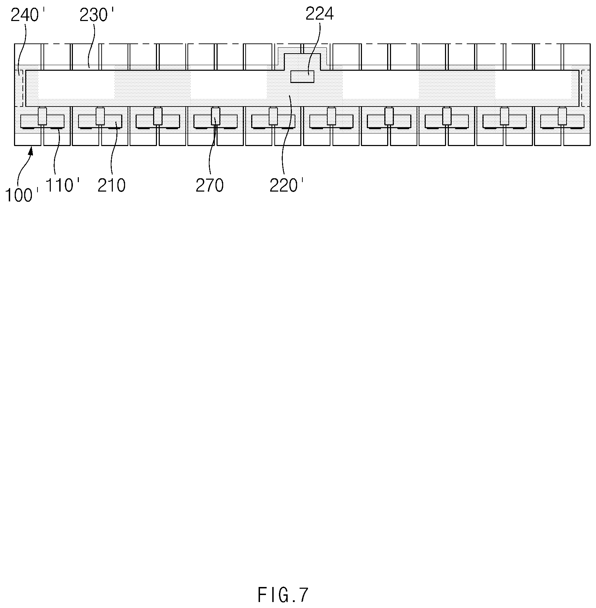

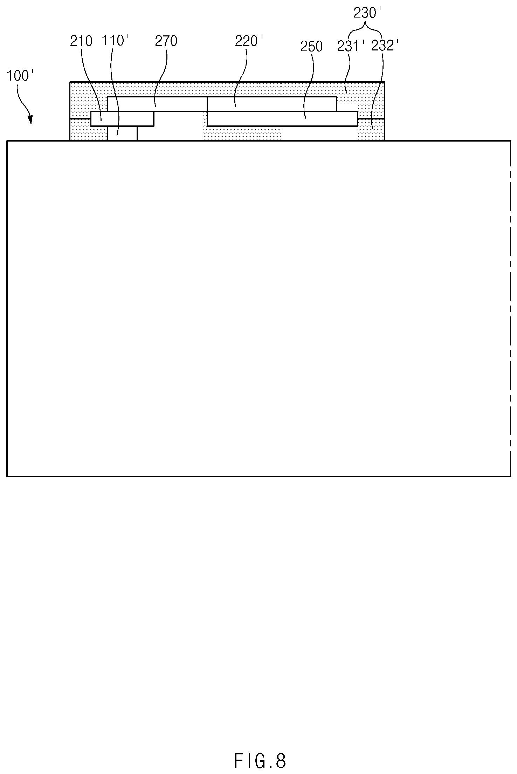

FIG. 6 is a schematic perspective view illustrating the battery pack 10' according to Embodiment 2 of the present invention, and FIG. 7 is a schematic plan view illustrating a state when the battery pack 10' is viewed from the top according to Embodiment 2 of the present invention. FIG. 8 is a schematic perspective view illustrating a state when a cross-section taken along line C-C' of FIG. 6 is viewed from the side.

Referring to FIGS. 6 to 8, the battery pack 10' according to Embodiment 2 of the present invention may include a cell group 100' and a busbar assembly 200'.

The cell group 100' may include one or more cells and a terminal 110'. Here, the cell group 100' may not include the terminal support 120, unlike Embodiment 1 of the present invention.

The busbar assembly 200' according to Embodiment 2 of the present invention may include a circuit board 220' for sensing the cell group 100'. The circuit board 220' may be disposed on an upper portion of the plurality of cell groups 100' and may have a thin plate shape extending in a stacking direction of the cell groups 100'.

As an example of a configuration for electrical connection between the circuit board 220' and the busbar 210, the busbar assembly 200' of the battery pack 10' according to Embodiment 2 of the present invention may further include a terminal 270.

The terminal 270 may have one end connected to the circuit board 220' and the other end connected to the busbar 210. In addition, the terminal 270 may have a thin plate shape extending from the circuit board 220' toward the busbar 210. Here, the circuit board 220' may have one end slightly protruding so as to be efficiently connected to the terminal 270.

The terminal 270 may be a conductor to electrically connect the circuit board 220' to the busbar 210. For example, the terminal 270 may include copper or nickel. Preferably, the terminal 270 may be made of copper or nickel. If the terminal 270 is made of copper or nickel, the terminal 270 may have conductivity and be connected through laser welding.

Examples of the method for connecting the terminal 270 to the circuit board 220' and the busbar 210 may include soldering and laser welding. Specifically, the terminal 270 may be connected to the circuit board 220' by the soldering and may be connected to the busbar 210 by the laser welding.

The laser welding may have a relatively simple process, and a time required for the process may be shortened, and thus, efficiency of the connection process may be improved. However, the laser welding may not be performed directly on the circuit board 220' due to a risk of damage such as generation of a hole, which occurs in the circuit board 220'. On the other hand, the busbar assembly 200' according to Embodiment 2 of the present invention includes the terminal 270 made of copper or nickel and thus may be connected to the busbar 210 through the laser welding. Thus, the efficiency of the process of assembling the busbar assembly 200' may be improved.

As an example of a configuration for transmitting data about the cell group 100' to the outside, the circuit board 220' according to Embodiment 2 of the present invention may include an antenna 224.

The antenna 224 may have a shape printed with a pattern. Thus, the antenna 224 may be laminated into the film 230' together with other configurations.

If the circuit board 220' includes the antenna 224, the data on the sensed cell group 100' may be wirelessly transmitted to the outside even if there is no connection through the contact. Thus, the circuit board 220' may relatively efficiently transmit the data to the outside.

The busbar assembly 200' according to Embodiment 2 of the present invention may be laminated by pressing the busbar 210, the circuit board 220', the support part 250, and the terminal 70, which are disposed between the upper film 231' and the lower film 232', by using a pressing jig or the like.

Since the cell group 100' according to Embodiment 2 of the present invention does not include the terminal support part 120, the busbar assembly 200' of the battery pack 10' may be provided in a substantially thin plate shape. Thus, the busbar assembly 200' may be disposed in a relatively small space, and thus, space utilization of the battery pack 10' may be improved.

Since the busbar assembly 200' of the battery pack 10' according to Embodiment 2 of the present invention has a relatively simple shape, the busbar assembly 200' may be fixed to the cell group 100' in such a manner, in which the fixing part 240' is inserted into the cell group 100', without additional coupling such as the coupling member 243.

As described above, although not shown in Embodiment 2 of the present invention, features of the present invention may be applied even to a battery module of the same type as the battery pack 10'. Here, the cell group 100 may be one square cell. In addition, the cells may be gathered together to provide a battery module similar to the battery pack 10according to Embodiment 2 of the present invention. Thus, the features according to Embodiment 2 of the present invention may not be limited to the battery packs and may be equally applied to the battery module.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10, 10': Battery pack
100, 100': cell group
110, 110': Terminal
120: Terminal support part
200, 200': Busbar assembly
210: Busbar
220, 220': Circuit board
221: Body part
222: Connection part
223: Connector
224: Antenna
230, 230': Film
231, 231': Upper film
232, 232': Lower film
240. 240': Fixing part
241: Horizontal portion
242: Vertical portion
242-1: Coupling hole
243: Coupling member
250: Support part
260: Conductive adhesive
270: Terminal

## Claims

1. A battery pack comprising:
a plurality of cell groups comprising one or more cells and a terminal; and
a busbar assembly disposed on one end of a top surface of each of the cell groups,
wherein the busbar assembly comprises:
a busbar disposed at a position corresponding to a position of the terminal to electrically connect the cell groups to each other;
a circuit board electrically connected to the busbar to sense the cell groups; and
a film laminated on the busbar and the circuit board to prevent the busbar and the circuit board from moving.

2. The battery pack of claim 1, wherein the circuit board comprises:
a body part having a thin plate shape extending in a stacking direction of the cell groups; and
a connection part having one end connected to the body part and the other end electrically connected to the busbar,
wherein one surface of the connection part, which faces the busbar, is opened so that a conductive portion therein is exposed.

3. The battery pack of claim 2, wherein the busbar assembly further comprises a conductive adhesive attached to one surface of the connection part to electrically connect the connection part to the busbar.

4. The battery pack of claim 2, wherein the circuit board further comprises a connector connected to the body part so as to be electrically connected to the outside.

5. The battery pack of claim 2, wherein the connection part has a bent shape so that one end and the other of the connection part in a thickness direction are disposed at positions spaced apart from each other.

6. The battery pack of claim 2, wherein the busbar assembly further comprises a support part disposed below the body part to support the body part and laminated into the film together with the busbar and the circuit board.

7. The battery pack of claim 6, wherein the support part comprises acrylic.

8. The battery pack of claim 1, wherein the busbar assembly further comprises a terminal having one end connected to the circuit board and the other end connected to the busbar,
wherein the terminal comprises copper (Cu) or Nickel (Ni).

9. The battery pack of claim 8, wherein the terminal is connected to the circuit board through soldering and is connected to the busbar through laser welding.

10. The battery pack of claim 1, wherein the busbar assembly further comprises a fixing part disposed on each of both ends of the film to fix the film to the cell groups.

11. The battery pack of claim 10, wherein the fixing part comprises:
a horizontal portion surrounded by the film so as to be fixed to the film; and
a vertical portion connected to the horizontal portion in a bent shape and disposed to be in contact with the cell groups.

12. The battery pack of claim 11, wherein the film comprises:
an upper film disposed above the busbar and the circuit board; and
a lower film disposed below the busbar and the circuit board,
wherein the horizontal portion is disposed between the upper film and the lower film.

13. The battery pack of claim 12, wherein the lower film is opened at a position corresponding to a position of the terminal so that the busbar and the terminal are in contact with each other.

14. The battery pack of claim 11, wherein a distance between the vertical portions disposed on both ends of the films corresponds to the sum of widths of the cell groups.

15. The battery pack of claim 11, wherein the vertical portion has a coupling hole with a shape that passes from one surface facing the cell group to the other, and
the fixing part further comprises a coupling member coupled to the coupling hole so that the vertical portion is fixed to the cell groups.

16. The battery pack of claim 1, wherein the busbar assembly has a thin plate shape.

17. The battery pack of claim 1, wherein the film comprises an insulating film.

18. The battery pack of claim 1, wherein the film is opened at a position corresponding to a position of the terminal so that the busbar and the terminal are in contact with each other.

19. The battery pack of claim 1, wherein the circuit board comprises an antenna having a shape printed with a pattern, and
data on cell groups is wirelessly transmitted to the outside through the antenna.

20. The battery pack of claim 1, wherein the circuit board comprises a flexible circuit board of which a shape is deformed when force is applied.

21. The battery pack of claim 1, wherein the cell group further comprises a terminal support part disposed to surround the terminal so as to support the terminal.

22. A battery module comprising:
a plurality of cell comprising a terminal protruding from one end thereof; and
a busbar assembly disposed on one end of a top surface of each of the cells,
wherein the busbar assembly comprises:
a busbar disposed at a position corresponding to a position of the terminal to electrically connect the cells to each other;
a circuit board electrically connected to the busbar to sense the cells; and
a film configured to laminate the busbar and the circuit board to prevent the busbar and the circuit board from moving.
